# EUROPEAN PATENT APPLICATION

(11) **EP 1 950 675 A1**
(43) Date of publication of application: **30.07.2008**
(21) Application number: 06823381.6
(22) Date of filing: 14.11.2006
(51) Int. Cl.: G06F 17/50

(54) **CAD DEVICE AND PROGRAM USED FOR THE SAME**

(30) Priority: 15.11.2005 JP 2005329734
(71) Applicant: YAZAKI CORPORATION, Minato-ku Tokyo 108-8333 (JP)
(72) Inventor: GOTOU, Hiroki. c/o Yazaki Parts Co Ltd, Shizuoka (JP); ONO, Shiyuuji, c/o Yazaki Parts Co Ltd, Shizuoka (JP); TSUCHIYA, Shinnji, c/o Yazaki Parts Co Ltd, Shizuoka (JP)
(74) Representative: Grünecker, Kinkeldey, Stockmair & Schwanhäusser Anwaltssozietät
(86) International application number: PCT/JP2006/322679
(87) International publication number: WO 2007/058181

(57) **Abstract**

A CAD apparatus is comprised of: input unit 102A for Inputting design input information of the component model by a CAD operator; sequence information storage unit 105A for previously storing thereinto sequence information corresponding to information produced by dividing all of designing processes related to the component model and by ordering the divided designing processes; designing reference storage unit 1058 for previously storing thereinto a designing reference which constitutes a reference for designing the component model, and has been allocated to each of the plural-divided designing processes; designing unit 101 A for judging whether or not the designing input information entered in each of the designing processes can satisfy the designing reference, and for automatically designing the component model allocated to the designing process and for permitting a transfer to the next designing process in such a case that the designing unit judges that the designing input information can satisfy the designing reference; and display unit capable of displaying thereon at least the component model designed by the designing unit 101A.

## Description

### BACKGROUND OF THE INVENTION

### 1. Field of the invention

The present invention is related to a CAD (Computer Aided Design) apparatus capable of effectively designing component models such as connectors and protectors, which are provided for wire harness harnessed in vehicles, and is also related to a computer program employed in the CAD apparatus.

### 2. Description of the related art

Conventionally, CAD apparatuses capable of effectively designing component models such as connectors and protectors which are provided for wire harness harnessed in vehicles have been proposed in the below-mentioned patent publication 1, patent publication 2, and so on.

These conventional CAD apparatuses have been equipped with various sorts of functions in order that designers that have relatively slight experiences can carry out the below-mentioned difficult works. As to the above-described difficult works, designers express three-dimensional shapes that have been imaged in their brains with respect to two-dimensional drawings, and/or designers image three-dimensional shapes from two-dimensional drawings, Among the above-described various functions, dimensions as to shapes of component models such as connectors and protectors are changed, which are displayed in virtual spaces on displays; view points of these component models are changed; the dimensions of the component models are enlarged and/or compressed; otherwise, dimensions of components are inputted so as to correct the shapes of these component models.
Patent publication 1: JP-A-2002-230041
Patent Publication 2: JP-A-2003-44547

However, in the conventional CAD apparatuses, component models can be formed in accordance with individual designing methods and also original designing orders established by respective designers. As a consequence, since there are apparently differences of skillful degrees among the respective designers, large differences may readily occur in forgetting of investigations, shapes, total numbers of designing processes, designed qualities, and the like.

### SUMMARY OF THE INVENTION

The present invention has been made to solve the above-described problems of the presently available CAD technical ideas, and therefore, has an object to provide a CAD apparatus capable of obeying a design standardizing sequence and a designing order, and thus, capable of securing equalizations of designing processes and stable designing qualities. Further, the -present invention has another object to provide a program that is used in the above-described CAD apparatus.

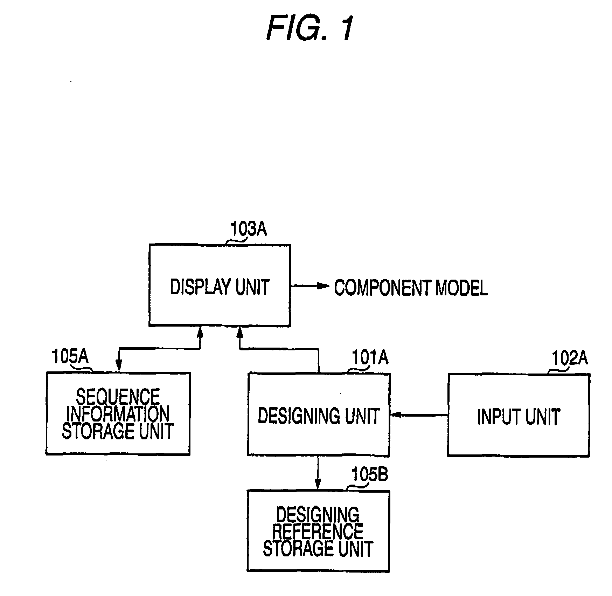

To solve the above-described problems, as shown in Fig. 1, a CAD apparatus, according to a first aspect of the present invention, is featured by such a CAD apparatus having a design aiding function capable of effectively designing a predetermined component model, comprising: an input unit 102A for inputting design input information of the component model by a CAD operator; a sequence information storage unit 105A for previously storing thereinto sequence information corresponding to information produced by dividing all of designing processes related to the component model and by ordering the divided designing processes in order to effectively design the component model; a designing reference storage unit 105B for previously storing thereinto a designing reference which constitutes a reference for designing the component model, and has been allocated to each of the plural-divided designing processes; designing unit 101 A for judging whether or not the designing input information entered in each of the designing processes can satisfy the designing reference, and for automatically designing the component model allocated to the designing process and for permitting a transfer to the next designing process in such a case that the designing unit judges that the designing input information can satisfy the designing reference; and display unit 103A capable of displaying thereon at least the component model designed by the designing unit 101A.

in the CAD apparatus according to the first aspect of the present invention, both the sequence information and the designing references have been previously stored, while the sequence information corresponds to such information ordered after all of the designing processes related to the component model have been divided into the plural designing processes, and the designing references constitute the references for designing the component model, which have been allocated to the plural-divided designing processes. Then, the judging unit judges whether or not the designing input information entered in each of the designing processes can satisfy the designing reference, and automatically designs the component model allocated to the relevant designing process and permits the transfer to the next designing process in such a case that the designing unit judges that the designing input information can satisfy the designing reference. In other words, in such a case that the designing reference can be satisfied among the plurality of ordered designing processes, the transfer to the next designing process is basically permitted.

To solve the above-described problems, in accordance with a second aspect of the present invention, the CAD apparatus of the first aspect of the present invention is featured by further comprising: an identification information producing unit 103B by which in such a case that the designing unit judges whether or not the designing input information can satisfy the designing reference and then judges that the designing reference cannot be satisfied, identification information capable of identifying the judgment result is produced; forcible transfer instructing unit 102B for instructing a forcible transfer to the next designing process; and forcible transferring unit 103B for adding the identification information to the component model even in such a case that the designing input information cannot satisfy the designing reference when the forcible transfer is instructed, and for causing the component model added with the identification information to be displayed on the display unit 103A, and then for forcibly transferring the present designing process to the next designing process.

In the CAD apparatus of the second aspect of the present invention, the forcible transferring unit may add the identification information indicative of the above-described fact to the component model even in such a case that the designing input information cannot satisfy the designing reference when the forcible transfer is instructed, and may forcibly transfer the present designing process to the next designing process,

To solve the above-described problems, in accordance with a third aspect of the present invention, the CAD apparatus of either the first aspect or the second aspect of the present invention is featured by further comprising: calculating unit 101C for automatically calculating a shape at a predetermined place of the component model designated by the input unit 102A by referring to the designing reference; and the display unit 103A adds the automatically calculated shape to the component model, and then, displays thereon the component model added with the automatically calculated shape.

In the CAD apparatus according to the third aspect of the present invention, the shape at the predetermined place of the designated component model is automatically calculated, and the automatically calculated shape is added to the component model, and then the component model added with the automatically calculated shape is displayed.

To solve the above-described problems, in accordance with a fourth aspect of the present invention, the CAD apparatus of any one of the first aspect to the third aspect of the present invention is featured by that the display unit 103A displays the plural-divided designing processes ordered based upon the sequence information in relation to judgment results for judging whether or not the respective designing processes can satisfy the designing references.

In the CAD apparatus according to the fourth aspect of the present invention, the plural-divided designing processes ordered based upon the sequence information are displayed in relation to the judgment results for judging whether or not the respective designing processes can satisfy the designing reference. As a consequence, a designer can execute the respective designing processes while the designer can grasp flows of the operations.

To solve the above-described problems, in accordance with a fifth embodiment of the present invention, as represented in Fig. 1, a program is featured by such a program for causing a computer to function, in order to effectively design a predetermined component model, as; an input unit 103A for inputting design input information of the component model by a CAD operator; a sequence information storage 105A for previously storing thereinto sequence information corresponding to information produced by dividing all of designing processes related to the component model and by ordering the divided designing processes in order to effectively design the component model; a designing reference storage 105B for previously storing thereinto a designing reference which constitutes a reference for designing the component model, and has been allocated to each of the plural-divided designing processes; designing unit 101A for judging whether or not the designing input information can satisfy the designing reference, and for automatically designing the component model allocated to the designing process and for permitting a transfer to the next designing process in such a case that the designing unit 101A judges that the designing input information can satisfy the designing reference; and display unit 103A capable of displaying thereon at least the component model designed by the designing unit 101A,

In accordance with the program of the fifth mode of the present invention, both the sequence information and the designing references have been previously stored in the computer, while the sequence information corresponds to such information ordered after all of the designing processes related to the component model have been divided into the plural designing processes, and the designing references constitute the references for designing the component model, which have been allocated to the plural-divided designing processes. Then, the computer judges whether or not the designing input information can satisfy the designing reference, and automatically designs the component model allocated to the designing process and permits the transfer to the next designing process in such a case that the computer judges that the designing input information can satisfy the designing reference. In other words, in such a case that the designing reference can be satisfied among the plurality of ordered designing processes, the transfer to the next designing process is basically permitted.

In accordance with the first aspect of the present invention, the designing unit judges whether or not the designing input information entered in each of the designing processes can satisfy the designing reference, and automatically designs the component model allocated to the designing process and permits the transfer to the next designing process in such a case that the designing unit judges that the designing input information can satisfy the designing reference. In other words, in such a case that the designing reference can be satisfied among the plurality of ordered designing processes, the transfer to the next designing process is basically permitted. As a consequence, the designing works can be standardized, the designing orders can be obeyed, the designing process numbers can be equalized, and the stable designing quality can be secured.

In accordance with the second aspect of the present invention, the forcible transferring unit may add the identification information indicative of the above-described fact to the component model even in such a case that the designing input information cannot satisfy the designing reference when the forcible transfer is instructed, and may forcibly transfer the present designing process to the next designing process. As a consequence, while the designing works can be basically standardized and the designing orders can be basically obeyed, original designs that have not been so far proposed may be established.

In accordance with the third aspect of the present invention, the shape at the predetermined place of the designated component model is automatically calculated, and the automatically calculated shape is added to the component model, and then, the component model added with the automatically calculated shape is displayed. As a consequence, the designing works can be standardized and the designing orders can be obeyed, and in addition, the work efficiency may also be improved.

In accordance with the fourth aspect of the present invention, the plural-divided designing processes ordered based upon the sequence information are displayed in relation to the judgment results for judging whether or not the respective designing processes can satisfy the designing reference. As a consequence, the designer can execute the respective designing processes while the designer can grasp flows of the operations. Accordingly, the designing works can be standardized, the designing orders can be more firmly obeyed, the designing process numbers can be equalized, and the stable designing quality can be secured.

In accordance with the fifth aspect of the present invention, the computer is caused to judge whether or not the designing input information can satisfy the designing reference, and to automatically design the component model allocated to the designing process and to permit the transfer to the next designing process in such a case that the computer judges that the designing input information can satisfy the designing reference. In other words, in such a case that the designing reference can be satisfied among the plurality of ordered designing processes, the transfer to the next designing process is basically permitted. As a consequence, the designing works can be standardized, the designing orders can be obeyed, the designing process numbers can be equalized, and the stable designing quality can be secured.

### BRIEF DESCRIPTION OF THE DRAWINGS

Fig. 1 is a block diagram for indicating a basic structure of the present invention.
Fig. 2 is a block diagram for indicating a hardware structure related to a CAD apparatus and a program thereof, according to an embodiment mode of the present invention.
Fig. 3 is a flow chart for describing a summarized process order related to the embodiment mode of the present invention;
Fig. 4 is a flow chart for exemplifying a navigation process operation contained in one designing process of Fig. 3.
Fig. 5A and Fig. 5B are flow charts for representing sub-routines related to the process order of Fig. 4.
Fig. 6 is a diagram for exemplifying a design aiding screen related to the process order of Fig. 4 and Fig. 5.
Fig. 7 is a diagram for exemplifying another design aiding screen related to the process orders of Fig. 4 and Fig. 5.
Fig. 8 is a diagram for exemplifying another design aiding screen related to the process orders of Fig. 4 and Fig. 5.
Fig, 9 is a diagram for exemplifying another design aiding screen related to the process orders of Fig. 4 and Fig. 5.
Fig. 10 is a diagram for exemplifying a further design aiding screen related to the process orders of Fig. 4 and Fig. 5.

### DESCRIPTION OF THE PREFERRED EMBODIMENTS

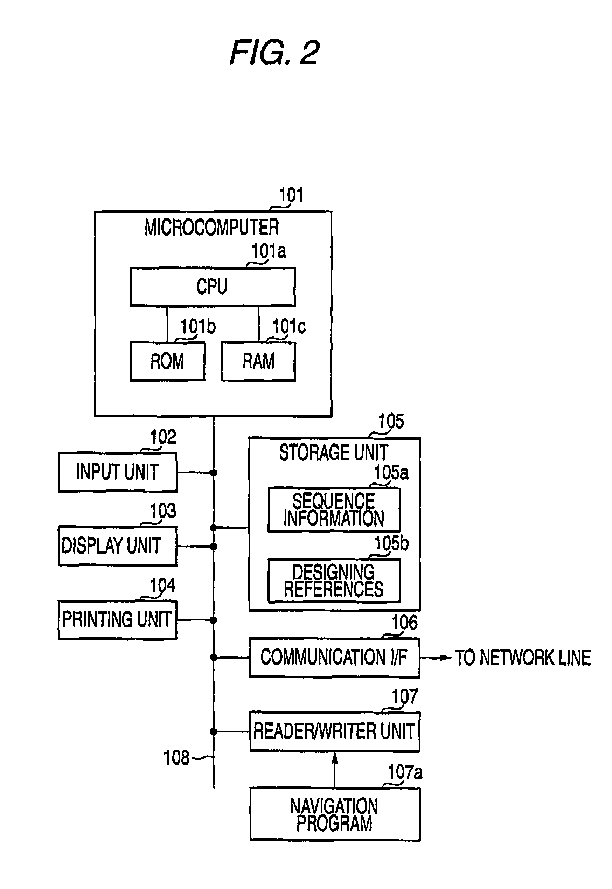

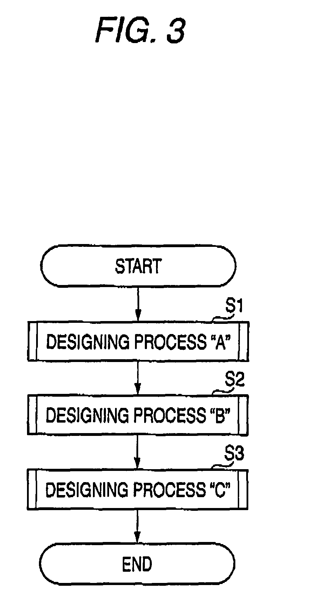

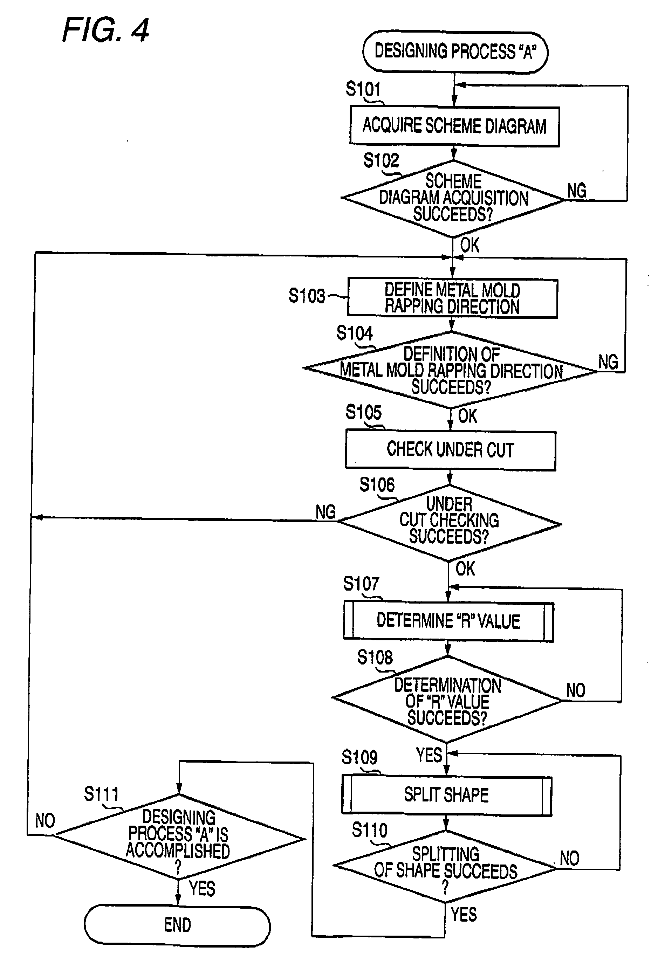

Referring now to drawings, a description is made of embodiment modes of the present invention. Fig. 2 is a block diagram for indicating a hardware structure related to a CAD apparatus and a program thereof, according to an embodiment mode of the present invention. Fig. 3 is a flow chart for describing a summarized process order related to the embodiment mode of the present invention. Fig. 4 is a flow chart for exemplifying relationship between the process order of Fig. 3 and a business order in a metal mold designing section.

As shown in Fig. 2, the CAD apparatus may be embodied by a computer apparatus that is arranged by containing a microcomputer 101, an input unit 102, a display unit 103, a printing unit 104, a storage unit 105, and a communication I/F (interface) 106.

The microcomputer 101 contains a CPU (Central Processing Unit) 101 a, a ROM 101 b that has stored thereinto a boot program and the like, and a RAM 101c that temporarily stores thereinto various sorts of processed results. The input unit 102 is a keyboard, a mouse, and the like, which enter the above-described respective values; the display unit 103 is a liquid crystal display device, and the like, which display thereon processed results; and the printing unit 104 is a printer which prints processed results. Also, the storage unit 105 corresponds to a hard disk drive that stores thereinto various sorts of databases and processed results. Both sequence information 105a and design references 105b are stored in this storage unit 105, which are utilized in process orders (will be described later). The communication interface 106 corresponds to a modem board and the like, while the communication interface 106 is connected to a network line, for instance, a LAN (Local Area Network), the Internet, or the like so as to perform data communications with respect to another apparatus and another terminal. The reader/writer unit 107 corresponds to an apparatus that reads a scheme diagram, a navigation program 107a related to the present invention, and the like. The scheme diagram (will be explained later) is provided in the form of electronic data. These - respective structural elements have been connected via an internal bus 108 to each other.

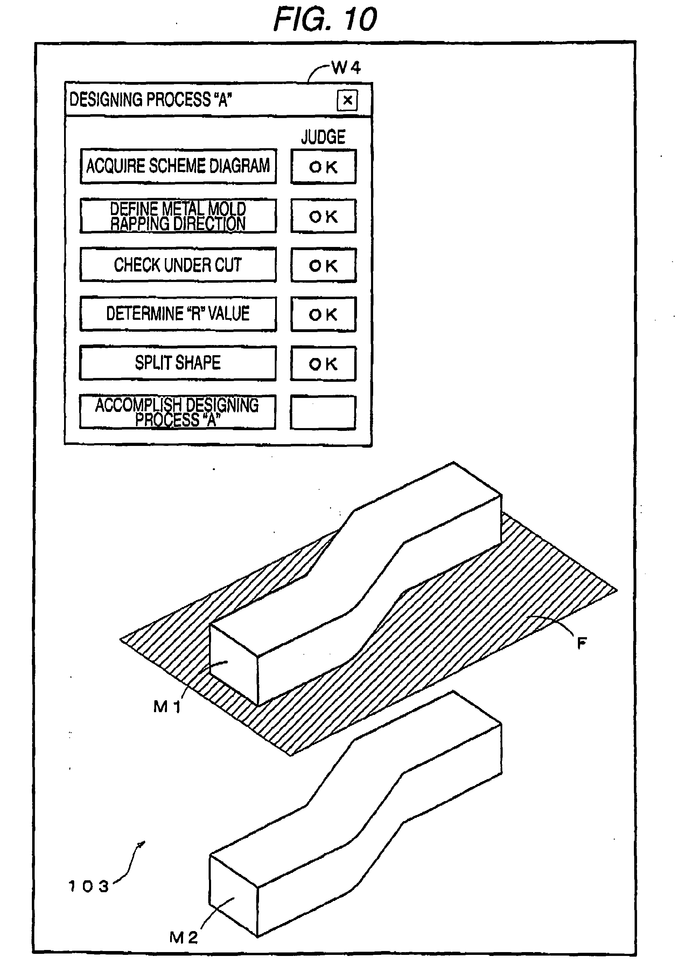

The sequence information 105a to be stored in the storage unit 105 corresponds to such information that in order to effectively design a component model such as a connector, a protector, or the like, all of designing processes related to the component model are divided into a plurality of designing processes, and thereafter, the plurality of divided designing processes are ordered. For instance, as shown in Fig. 10 and Fig. 11, if all of the designing processes have been divided and thinned in advance, then "R" processes are required to be executed plural times, which may lower an efficiency. As a result, the designing processes are ordered in such a manner that the "R" processes are carried out in advance by considering the above-described reason.

Also, the designing references 105b that are stored in the storage unit 105 correspond to such information that has been predetermined as references for designing component models. The designing references 105b correspond to, for example, "R" values which have been previously determined by considering angles, thickness, materials, and the likes of adjoining planes of wire harness which is penetrated in such a case that a tool such as a drill employed when a metal mold is formed, and a component is a protector; a rapping direction every model shape; a splitting line for supposing an upper cover and a lower cover; and so on. It should also be noted that in accordance with embodiment modes of the present invention, the storage unit 105 corresponds to both a sequence information storage unit and a designing reference storage unit.

With employment of such an arrangement, the CPU 101a is initiated based upon the boot program stored in the ROM 101 b, and reads the installed navigation program 107a, and then, is operated in accordance with this read navigation program 107a. As a result, the above-described computer apparatus may function as the CAD apparatus according to the present invention. The navigation program 107a may be alternatively installed in the computer apparatus by utilizing not only the reader/writer unit 107, but also by utilizing a network line.

As indicated in Fig. 3, the microcomputer 101 executes, for instance, a designing process "A" in a step S1; executes a designing process "B" in a step S2; and executes a designing process "C" in a step S3. The designing process "A" to the designing process "C" have been ordered after all of designing processes related to the component models such as the connectors and the protectors have been mainly divided. Moreover, the designing process "A" to the designing process "C" have been constituted by such processes which have been divided in a plurality of sub-divided processes and thereafter by the sub-divided processes have been ordered.

The designing process "A" to the designing process "C" shown in Fig. 3 have been defined based upon, for example, a predetermined designing order so as to effectively design a metal mold, For instance, the designing process "A" corresponds to a navigation process capable of effectively performing works in an initial phase in the metal mold designing section; the designing process "B" corresponds to a navigation process capable of effectively performing works in a middle phase in the metal mold designing section; and the designing process "C" corresponds to a navigation process capable of effectively performing works in a final phase in the metal mold designing section.

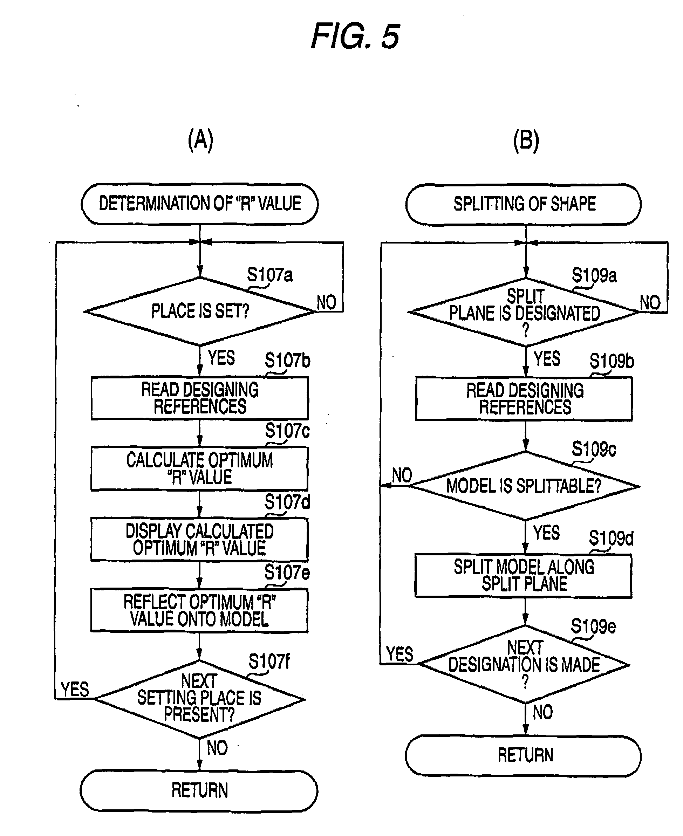

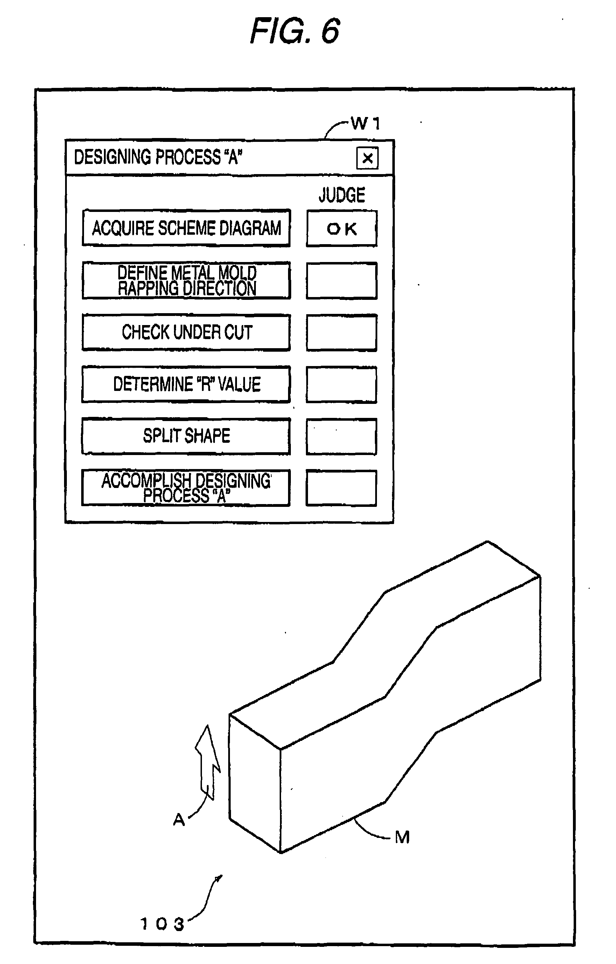

Fig. 4 is a flow chart for exemplifying a navigation process operation contained in one designing process (namely, designing process "A") of Fig. 3. Fig. 5A and Fig. 5B are flow charts for representing sub-routines related to the process sequence of Fig. 4. Fig. 6 to Fig. 10 are diagrams for exemplifying design aiding screens related to the process sequence shown in Fig. 4 and Fig. 5.

As represented in Fig. 6, designing orders contained in this designing process are displayed by buttons on a window "W1" within the design aiding screen of the display unit 103. The above-described designing orders have been displayed in this sequence of "scheme diagram is acquired", "metal mold rapping direction is defined", --, and judging boxes have been displayed at right sides thereof, It has been determined that the designing orders under representation cannot be basically skipped. In other words, it is so assumed that a selecting operation cannot be advanced to a designing order lower than a present designing order unless an "OK" sign is displayed in the relevant- judging box. At a lower right portion of the window "W1", a model "M" of a protector (component) under production at the present stage is being displayed.

As shown in the flow chart of Fig. 4, for example, a scheme diagram supplied from a vehicle manufacturer is acquired in accordance with the designing orders displayed as explained above (step S101). When the scheme diagram is acquired, for instance, the scheme diagram acquiring button of the window "W1" of Fig, 6 is clicked, so that the relevant data is acquired to the microcomputer 101 from a recording medium into which the scheme diagram has been stored via the reader/writer unit 107. When the acquisition of the scheme diagram can succeed, this fact is indicated in the judging box ("OK" in step S102). If the acquisition cannot succeed, then the process operation of the step S101 is repeatedly carried out ("NG" in step S102). In the scheme diagram, various sorts of information have been contained, for example, the information related to sorts of components, component models indicative of schematic component shapes, mounting positions, use conditions, and relative wire harness have been contained.

Next, as indicated by an arrow "A" of Fig. 6, a metal mold rapping direction is defined on a model "M" (step S103), and if there is no problem in this metal mold rapping direction, then this fact is displayed on the judging box ("OK" in step S104). If this metal mold rapping direction has the problem, then this fact is displayed in the judging box, and--then, a model designer is prompted to perform re-definition as to the metal mold rapping direction ("NG" in step S104).

Next, a check of "under cut" is made based upon the defined metal mold rapping direction (step S106). If there is no problem In the "under cut", then such a fact is displayed in the judging box ("OK" in step S106). If the "under cut" contains the problem, then such a fact is indicated in the judging box, and the model designer is prompted to perform re-definition as to the metal mold rapping direction ("NG" in step S106).

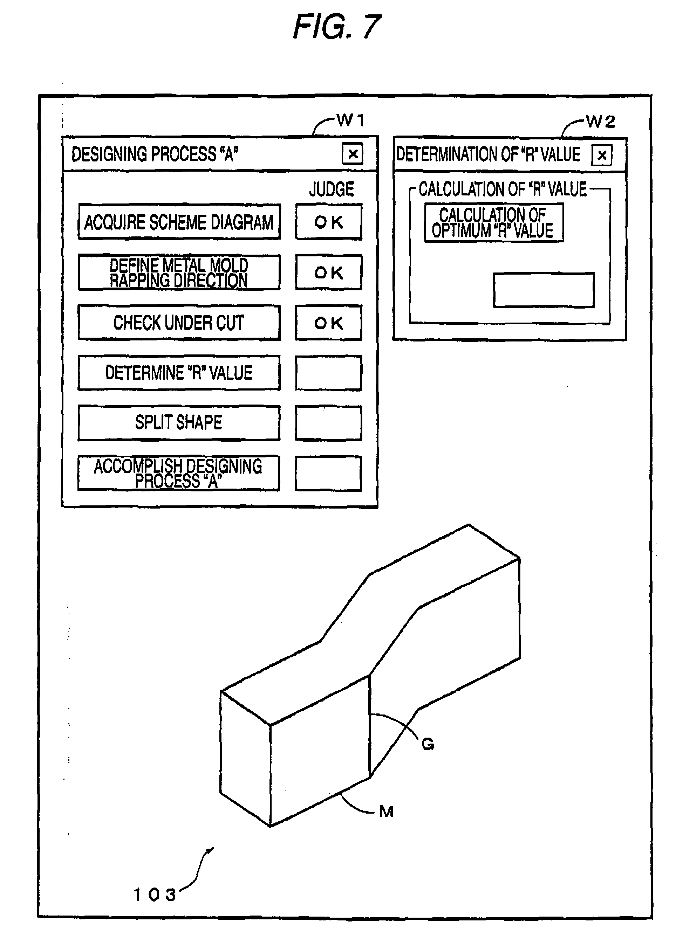

Next, an "R" value at a predetermined place on the model "M" is determined (step S107). As will be described in detail based upon the sub-routine of Fig. 5(A), this "R" value is determined as follows: That is, a setting operation for a place to which "R" is attached with respect to the model "M" is under waiting status ("No" in step S107a). As indicated in a line "G" of Fig 7, when the place to which "R" is attached on the model "M" is set ("Yes" in step S107a), such a window as indicated in "W2" of Fig. 7 is displayed; and when a Calculation button for an optimum "R" value is clicked, the designing references are read (step S107b) so as to calculate the optimum "R" value. As previously described, the optimum "R" value is automatically calculated at the set place with reference to the designing references.

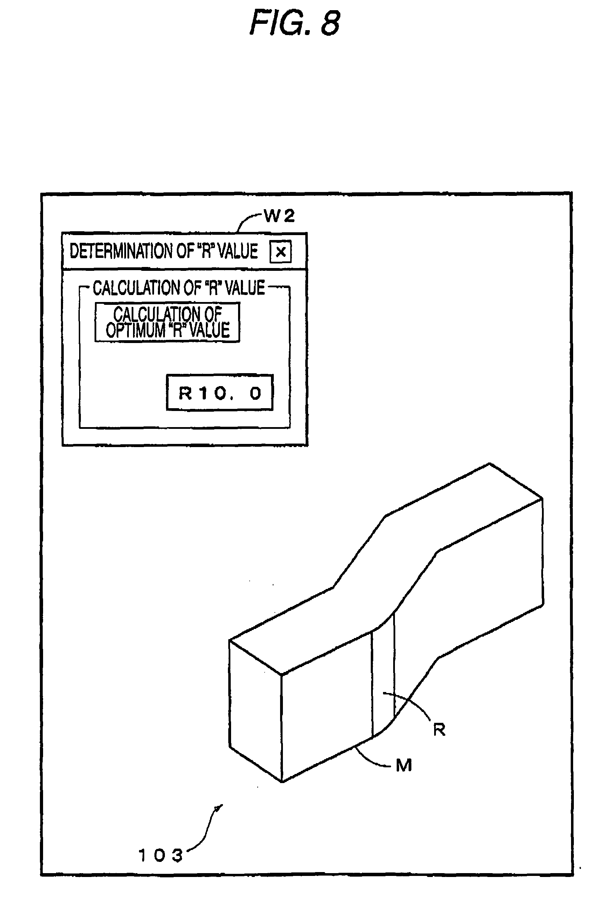

As shown in Fig. 8, the calculated optimum "R" value is indicated in a display box of the window "W2" (step S107d), and also, the optimum "R" value is reflected on the place set on the model "M" so as to be drawn (step S107e). Then, if such an indication is made that a next setting place is present by performing a predetermining operation by the input unit 102 ("Yes" in step S107f), then the process operation is returned to the previous step S107a. If not ("No" in step S107f), then this sub-routine is accomplished.

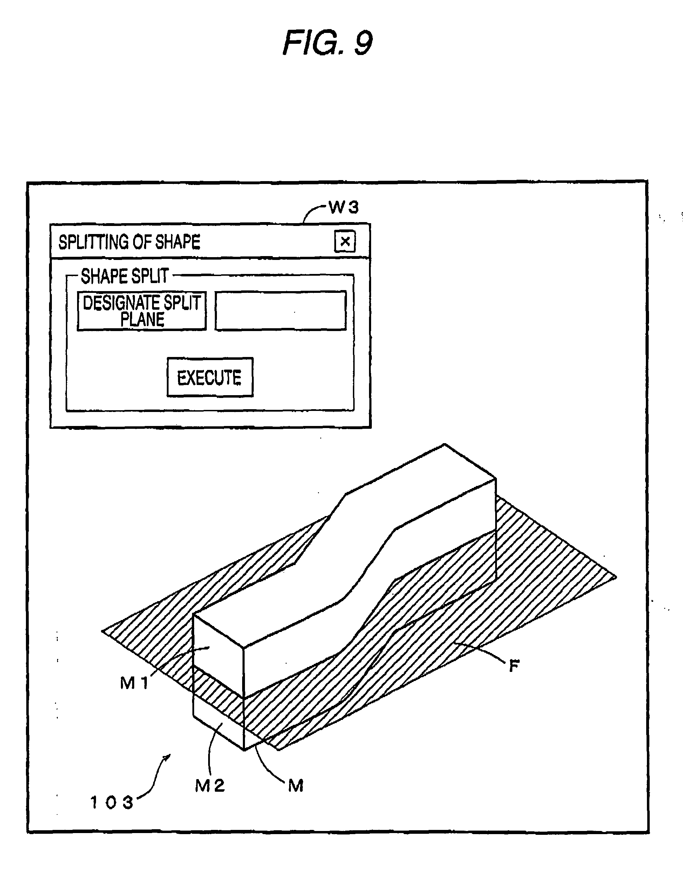

Next, returning back to Fig. 4, when it is so judged that the determination of the "R" value is accomplished ("Yes" in step S108), a shape slitting work is carried out with respect to the model "M" (step S109). This shape splitting work implies such a work that a connector, a protector, or the like is splitted into, for instance, an upper cover and a lower cover. As is indicated in detail based upon a sub-routine of Fig. 5(B), while a designation of a split plane with respect to the model "M" is under waiting condition ("No" in step S109a), as shown in a line "F" of Fig. 9, if the split plane Is designated on the model "M" ("Yes" in step S109a), then such a window as indicated by "W3" of Fig. 9. When a designation button of the split plane is clicked, the designing references are read (step S109b), and a judgment is made whether or not the split plane can be split (step S109c). It should also be noted that splittable portions which have been previously determined in correspondence with sorts, shapes, thicknesses, materials of components, and information which indicate the splittable portions have been contained in the designing references.

If it is so judged that the model "M" can be split based upon the designated split plane "T" ("Yes" in step S109c), as represented-in Fig. 10, then the model "M" is splitted into both a portion of an upper cover indicated by symbol "M1" and a portion of a lower cover indicated by symbol "M2", and then, are displayed (step S109d). If it is so judged that the model "M" cannot be split ("No" in step S109c), then the process operation is returned to the previous step S109a in which a re-designation of the split plane is waited. Into the split shape, a distance between a side wall of the upper cover and an upper wall thereof, a gap between the side wall of the upper cover and a side, wall of the lower cover, a thickness, and the like are also reflected by referring to the designing references. Then, if it is so indicated that a next designation place is present by executing a predetermined operation by the input unit 102 ("Yes" in step S109e), then the process operation is returned to the above-described step S109a. If not ("No" in step S109e), then this sub-routine is accomplished.

Then, returning back to Fig. 4, when it is so judged that the shape splitting work is accomplished ("Yes" in step S110), such a window "W4" as shown in Fig. 10 is displayed which prompts the model designer to click an end button of this designing process. When the end button displayed in the window "W4" is clicked, this designing process is accomplished ("Yes" in step S111). In such a case that the above-described designing process is re-tried, a predetermined operation is carried out by the input unit 102 in order that the process operation is returned to the above-described step S103. As apparent from the foregoing description in such a case that the shape splitting work is wanted to be re-tried, a predetermined operation may be carried out by the input unit 102 in order that the process operation may be returned to the previous step S109. In such a case that the place to which "R" is attacked is wanted to be defined in another definition manner, a predetermined operation may be carried out by the input unit 102 in order that the process operation may be returned to the previous step S107. Also, when the designing references cannot be satisfied, a warning indication may be alternatively made.

Similarly, designing orders may be navigated in more detail even in other designing processes "B" and "C." As previously described, even in the respective designing processes, the designing orders are navigated in detail, so that fluctuations contained in the designing precision can be eliminated, and furthermore, the work efficiencies can be improved, In particular, the designing orders are navigated based upon the designing references which have been previously determined as the reference capable of designing the component model, and the judgment is made whether or not the respective designing processes have been accomplished under normal condition, so that the models can be standardized, and also, the more stable designing qualities can be secured.

As previously described, in accordance with the embodiment mode of the present invention, since the model designer merely designs the component model in accordance with the design aiding screens which are sequentially displayed, the component model can be constructed in such a manner that the designing process numbers can be equalized, and the stable designing qualities can be secured. In particular, since the judgment is made whether or not each of the designing processes has been accomplished under normal condition based upon the designing references, the models can be standardized, and also, the stable designing qualities can be secured. Also, since one design aiding screen is updated by the next design aiding screen in such a case that each of the designing processes has been accomplished under normal condition, the model designer can be caused to strictly obey the designing orders.

Although not shown in the drawings, when the forcible transfer to the next designing process is instructed, even in such a case that the design input information such as the "R" value cannot satisfy the designing references, the identification information (for instance, relevant portion is indicated by red color flickering manner) indicative of this fact may be alternatively added to the component model so as to forcibly transfer the designing process to the next designing process, It should be so designed that the determined designing orders cannot be skipped. Since this designing rule is established, while the designing works can be basically standardized and the designing orders can be basically obeyed, original designs that have not been so far proposed may be established.

While the present invention has been described in detail with reference to the specific embodiment mode, it is apparent that ordinarily skilled- engineers may modify and change the present invention without departing from the technical scope and the spirit of the present invention.

The present patent application has been filed on the basis of claiming Japanese Patent Application (JP-A-2005-329734) filed on November 15, 2005, the contents of which have been incorporated herewith as references.

The CAD apparatus and the program used therein, according to the present invention, have such effects that the designing works can be standardized, the designing orders can be obeyed, the designing process numbers can be equalized, and the stable designing qualities can be secured. The present invention is suitably applied as the CAD apparatus and the program utilized therein, capable of effectively designing not only the component models as to the connectors and the protectors employed in the wire harness harnessed in the vehicle, but also the component models of the various sorts of apparatuses.

## Claims

1. A CAD apparatus having a design aiding function capable of effectively designing a predetermined component model, comprising:
an input unit which inputs design input information of the component model;
a sequence information storage which previously stores thereinto sequence information corresponding to information produced by dividing all of designing processes related to the component model and by ordering the divided designing processes;
a designing reference storage which previously stores thereinto designing reference that has been allocated to each of the plural-divided designing processes;
a designing unit which judges whether or not the designing input information entered in each of the designing processes can satisfy the designing reference, and, in a case that the designing unit judges that the designing input information can satisfy the designing reference, automatically designs the component model allocated to the designing process and allows a transfer to a next designing process; and
a display capable of displaying thereon at least the component model designed by the designing unit.

2. The CAD apparatus as claimed in claim 1, further comprising:
an identification information producing unit which, in a case that the designing unit judges whether or not the designing input information can satisfy the designing reference and then judges that the designing reference cannot be satisfied, produces identification information capable of identifying the judgment result;
a forcible transfer instructing unit which instructs a forcible transfer to the next designing process; and
a forcible transferring unit which adds the identification information to the component model even in a case that the designing input information cannot satisfy the designing reference when the forcible transfer is instructed, and causes the component model added with the identification information to be displayed on the display, and then for forcibly transferring the present designing process to the next designing process.

3. The CAD apparatus as claimed in claim 1, further comprising:
a calculator which automatically calculates a shape at a predetermined place of the component model designated by the input unit by referring to the designing reference; and
wherein the display adds the automatically calculated shape to the component model, and then, displays thereon the component model added with the automatically calculated shape.

4. The CAD apparatus as claimed in claim 2, further comprising:
a calculator which automatically calculates a shape at a predetermined place of the component model designated by the input unit by referring to the designing reference;
wherein the display adds the automatically calculated shape to the component model, and then, displays thereon the component model added with the automatically calculated shape.

5. The CAD apparatus as claimed in claim 1, wherein the display displays the plural-divided designing processes ordered based upon the sequence information in relation to judgment results for judging whether or not the respective designing processes can satisfy the designing reference.

6. The CAD apparatus as claimed in claim 2, wherein the display displays the plural-divided designing processes ordered based upon the sequence information in relation to judgment results for judging whether or not the respective designing processes can satisfy the designing reference.

7. The CAD apparatus as claimed in claim 3, wherein the display displays the plural-divided designing processes ordered based upon the sequence information in relation to judgment results for judging whether or not the respective designing processes can satisfy the designing reference.

8. The CAD apparatus as claimed in claim 4, wherein the display displays the plural-divided designing processes ordered based upon the sequence information in relation to judgment results for judging whether or not the respective designing processes can satisfy the designing references.

9. A computer program product embodied on a computer readable medium, when executed by a computer, causes the computer to function, in order to effectively design a predetermined component model;
an input unit which inputs design input information of the component model;
a sequence information storage which previously stores thereinto sequence information corresponding to information produced by dividing all of designing processes related to the component model and by ordering the divided designing processes;
a designing reference storage which previously stores thereinto designing reference that has been allocated to each of the plural-divided designing processes;
a designing unit which judges whether or not the designing input information entered in each of the designing processes can satisfy the designing reference, in a case that the designing unit judges that the designing input information can satisfy the designing reference, and automatically designs the component model allocated to the designing process and allows a transfer to a next designing process; and
a display capable of displaying thereon at least the component model designed by the designing unit.
